(19) Europäisches Patentamt / European Patent Office / Office européen des brevets

(11) **EP 2 391 766 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **10702125.5**

(22) Anmeldetag: **01.02.2010**

(51) Int Cl.:
*D06M 11/36* (2006.01)   *D06M 11/83* (2006.01)
*C09D 5/00* (2006.01)   *C09D 7/12* (2006.01)
*D06P 1/00* (2006.01)   *D06M 15/572* (2006.01)
*C09D 5/30* (2006.01)   *C09D 5/33* (2006.01)
*C08K 3/08* (2006.01)

(86) Internationale Anmeldenummer:
**PCT/EP2010/051207**

(87) Internationale Veröffentlichungsnummer:
**WO 2010/086451 (05.08.2010 Gazette 2010/31)**

(54) **FLÜSSIGE ODER HALBFESTE FORMULIERUNG MIT INFRAROTREFLEKTIERENDEN PARTIKELN ZUR BESCHICHTUNG FLEXIBLER KÖRPER**

LIQUID OR SEMISOLID FORMULATION HAVING INFRARED-REFLECTING PARTICLES FOR COATING FLEXIBLE BODIES

FORMULATION LIQUIDE OU SEMI-SOLIDE COMPORTANT DES PARTICULES RÉFLÉCHISSANT LES INFRAROUGES, POUR LE REVÊTEMENT D'OBJETS SOUPLES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.01.2009 DE 102009006832**

(43) Veröffentlichungstag der Anmeldung:
**07.12.2011 Patentblatt 2011/49**

(73) Patentinhaber: **Bayerisches Zentrum Für Angewandte Energieforschun E.V.**
**97074 Würzburg (DE)**

(72) Erfinder:
• **MANARA, Jochen**
**97074 Würzburg (DE)**
• **REIDINGER, Matthias**
**91245 Simmelsdorf-Hüttenbach (DE)**
• **ARDUINI-SCHUSTER, Mariacarla**
**97273 Kürnach (DE)**
• **RYDZEK, Matthias**
**97688 Bad Kissingen (DE)**
• **LICKES, Marion**
**47803 Krefeld (DE)**
• **STAEDTLER, Jürgen**
**41751 Viersen (DE)**

(74) Vertreter: **Schlief, Thomas P.**
**Patentanwälte**
**Canzler & Bergmeier**
**Friedrich-Ebert-Straße 84**
**85055 Ingolstadt (DE)**

(56) Entgegenhaltungen:
EP-A1- 0 065 207   EP-A1- 1 429 104
WO-A2-2007/017195   DE-A1- 3 810 121
DE-A1- 10 010 538   DE-U1- 20 306 171
DE-U1- 29 716 362   FR-A- 1 120 743
GB-A- 718 533   US-A- 4 289 677
US-A- 6 017 981

## Beschreibung

Die Erfindung bezieht sich auf die Formulierung einer Paste oder einer Suspension, insbesondere auf Polyurethanbasis, mit infrarotreflektierenden Pigmenten zur spektralselektiven Beschichtung von flexiblen Substraten, wie Geweben, Membranen, Folien, Vliese, Filze, Gewirke, Gestricke oder Papiere. Die Paste oder Suspension wird mittels eines geeigneten Beschichtungsverfahrens wie z.B. Rakeln, Streichen, Tauchbeschichten oder Sprühen aufgebracht. Die Beschichtungen zeichnen sich dadurch aus, dass sie bei Raumtemperatur einen signifikant geringeren thermischen Emissionsgrad als das unbeschichtete Substrat aufweisen, wobei die Oberflächenstruktur/Textur des Substrates erhalten bleibt. Außerdem kann den Beschichtungen, unter Beibehaltung eines abgesenkten Emissionsgrades, ein nahezu beliebiger Farbeindruck verliehen werden. Bei der vorliegenden Erfindung kann auf aufwändige Füllstoffe, Additive und oberflächenmodifizierende Substanzen verzichtet werden. Die erfindungsgemäße Formulierung umfasst eine geeignete Polymermatrix aus mindestens einem thermoplastischen und/oder duroplastischen Polymer, insbesondere auf PU-Basis, in welche aufeinander abgestimmte niedrigemittierende Metallpartikel und vorzugsweise auch Farbpigmente unter Verwendung eines nicht-wässrigen Lösungsmittels eingebracht werden. Es ist gemäß der Erfindung möglich und bevorzugt, dass die besagte Formulierung nicht mehr als fünf Reagenzien enthält.

Bereits bei Raumtemperatur liegt der Anteil der Wärmestrahlung an der gesamten Wärmeübertragung zwischen Oberflächen in der gleichen Größenordnung wie der Anteil der Konvektion. Mit zunehmender Temperatur nimmt die Wärmeübertragung durch Strahlung deutlich stärker zu (proportional zur vierten Potenz der Temperatur) als die Wärmeübertragung durch Konvektion.

Eine Unterdrückung des Strahlungsaustauschs reduziert den gesamten Wärmeübertrag zwischen Oberflächen bis zur Hälfte. Im Realfall hängt die Verringerung des Wärmeübergangs von der Verminderung des Emissionsgrades ab. Je geringer dieser ist, desto höher fällt das Reduktionspotenzial aus. Niedrigemittierende Beschichtungen sind daher für zahlreiche Anwendungen wünschenswert, in denen die Wärmeübertragung verkleinert werden soll.

Es existieren bereits zahlreiche niedrigemittierende Beschichtungen in unterschiedlichen Variationen. Beispielsweise weisen polierte Metalloberflächen (z.B. Al, Ag, Au und Cu) in der Regel einen geringen Emissionsgrad auf. Bei sehr dünnen Metallschichten (im Nanometer-Bereich) erhält man hierbei sogar eine Transparenz im sichtbaren Spektralbereich.

Bisherige Patentanmeldungen hinsichtlich niedrigemittierender Beschichtungen z.B. auf Glasfasergeweben beziehen sich auf metallische Beschichtungen, siehe z.B. die DE 202 13 477 U1, in der ein aluminisiertes Glasgewebe beschrieben wird. Die metallisch-silbrig erscheinende Aluminiumschicht muss hierbei zum Schutz noch mit einer Schutzschicht aus Kunststoff, z.B. einem Fluorpolymer versehen werden. Als erreichbare Emissionsgrade werden Werte zwischen 0,24 und 0,40 genannt.

Ein weißes, IR-Strahlung reflektierendes Pigment, ist Gegenstand der DE 10 2005 061 684 A1. Dabei handelt es sich im Wesentlichen um Aluminiumpigmente, die z.B. mit $TiO_2$ beschichtet werden, um einen weißen Farbeindruck zu erhalten. Laut Offenlegungsschrift weisen die so hergestellten Pigmente einen geringen Emissionsgrad im Infraroten bei einem gleichzeitigen weißen Farbeindruck auf.

Eine Zusammensetzung für eine Pulverbeschichtung, welche neben thermoplastischen und/oder duroplastischen Harzbindemitteln weitere verbindende Reagenzien sowie Bestandteile für Pulverbeschichtungen wie Pigmente, Füllstoffe und Additive umfasst, wird in der US 2007/0251420 A1 genannt. Dort wird eine niedrig-emittierende Pulverbeschichtung basierend auf Al-Partikel beschrieben, wobei die Aluminiumpartikel mit Verbindungen wie Silica, (Meth)acrylpolymeren, Polyester und/oder Wachsen behandelt werden. Die mit dieser Beschichtung erreichten Emissionsgrade liegen bei Werten von 0,4 bis 0,55. Bevorzugt kommen hier Al-Partikel (non-leafing, d.h. Partikel, die vollständig vom Umgebungsmedium benetzt und in der Beschichtung homogen verteilt sind) mit einem Teilchendurchmesser D50 von 8 - 20 $\mu$m zur Anwendung, wobei der Anteil an Al bis zu 20% ausmacht. Insgesamt ist die Formulierung als aufwendig zu beurteilen.

In der DE 195 01 114 C2 werden reflektierende Plättchen mit einer Dicke < 10 $\mu$m und einer Fläche > 100 $\mu$m aus Metallen, Legierungen von Metallen, Halbleitern und dotierten Halbleitern genannt, welche einen Reflexionsgrad R > 40% im Wellenlängenbereich von 5 bis 100 $\mu$m aufweisen. Zusätzlich können auch noch weitere Pigmente zugegeben werden, um z.B. eine lindgrüne, helle Wandfarbe herzustellen. Der angeführte Ansatz ist zum einen relativ komplex, zum anderen liegen keine Angaben über die erzielten Emissionsgrade der Beschichtung vor.

Die US 2006/0159922 A1 offenbart eine Low-e Farbe (d.h. eine Farbe mit niedrigem thermischen Emissionsgrad) basierend auf Al- oder Cr-Plättchen (mit IR-transparenten Polymeren und Farbstoffen) für Gebäude. Auch optisch transparente ITO/FTO "core plates" mit einer Dicke von bis zu 1 nm werden genannt. Auch hier wird nur der Reflexionsgrad des Low-e Pigments, nicht aber einer darauf basierenden Beschichtung angegeben.

Zusammenfassend lässt sich feststellen, dass in der Patentliteratur zwar niedrigemittierende Beschichtungen zu finden sind. Eine sich aus hinreichend wenigen und einfachen Komponenten zusammensetzende und damit relativ kostengünstige niedrigemittierende Beschichtung auf Geweben, Membranen, Folien, Vliese, Filze, Gewirke, Gestricke oder Papiere mit einem exakt quantifizierten thermischen Emissionsgrad und einem nahezu beliebig einstellbaren Farbeindruck im visuellen Bereich des Spektrums wird aber nicht beschrieben und ist bisher nicht realisiert worden.

Die Aufgabe der Erfindung besteht darin, die Wärmeabstrahlung eines Gewebes, einer Membran, einer Folie, eines Vlieses, eines Filzes, eines Gewirkes, eines Gestrickes oder eines Papiers deutlich zu vermindern, um den Wärmeübergang signifikant zu reduzieren.

Diese Aufgabe wird durch die Merkmale der unabhängigen Ansprüche gelöst.

Der Vorteil der erfindungsgemäßen Formulierung der Beschichtungspaste oder -suspension liegt darin, dass es möglich ist, bei einem metallisch-silbrigen Farbeindruck (ohne zugesetzte Farbpigmente) einen sehr geringen Emissionsgrad von unter 0,25 und sogar unter 0,10 auf Geweben und Membranen unter Beibehaltung der Textur zu erreichen. Darüber hinaus kann ein niedriger Emissionsgrad der Beschichtung mit Werten kleiner 0,40 und sogar kleiner 0,30 unter Einstellung beliebiger Farbeindrücke durch die Zugabe vordispergierter Farbpigmente, welche vorzugsweise in einer Farbpaste zur Verfügung gestellt werden, kombiniert werden. Die Beschichtungspaste kann mit gängigen Beschichtungsverfahren, z.B. mittels Stahlwalzenbeschichtung, Luftrakel, Gummirakel, Streichen, Tauchbeschichten, Sprühen, Foulardieren, Pflatschen, Drucken, auf große Substratflächen preisgünstig in großtechnischem Maßstab aufgetragen werden, so dass homogene Beschichtungen resultieren. Hinsichtlich der Art der Aufbringung der Beschichtungspaste auf das Substrat besteht eine große Flexibilität, wodurch sich Beschichtungen auf Bandstraßen relativ einfach bewerkstelligen lassen.

Gegenstand der Erfindung ist die besagte Formulierung sowie ein flexibler Körper mit einem flexiblen, mit der Formulierung beschichteten und getrockneten Substrat. Ebenfalls ist die Verwendung der besagten Formulierung und des besagten flexiblen Körpers sowie die verschiedenen Beschichtungsverfahren Gegenstand dieser Erfindung.

Wenn vorliegend von "Farbpigmenten" die Rede ist, fallen im Rahmen dieser Erfindung unter diesen Begriff auch weiße und schwarze Farbpigmente. Die Farbpigmente können kugelförmig sein oder eine sonstige Form aufweisen.

Ein mögliches Einsatzgebiet für erfindungsgemäß behandelte flexible Substrate, wie Gewebe, Membranen, Folien, Vliese, Filze, Gewirke, Gestricke und Papiere, ist z.B. der Bereich der textilen Architektur. Der Begriff "textile Architektur" umfasst den Einsatz von Glas- oder Textilgeweben im Baubereich. Solche Gewebe können aufgrund der vielfältigen architektonischen und baulichen Möglichkeiten sowohl in Neubauten als auch in Altbauten integriert werden. Es lassen sich z.B. Dachkonstruktionen von großen Hallen, wie Sportarenen oder Flughafengebäuden, verwirklichen.

Die Erfindung umfasst derartige flexible Körper, deren flexibles Substrat mit mindestens einer Beschichtungslage der erfindungsgemäßen Formulierung beschichtet ist. Die Oberflächenstruktur bzw. Textur und die Flexibilität des Körpers bleiben hierbei auch nach der Trocknung der Formulierung vorzugsweise vollständig bzw. nahezu vollständig erhalten. Die Beschichtung kann hierbei direkt auf der Oberfläche des flexiblen Substrats oder auf mindestens einer Zwischenschicht aufgebracht sein. Auch kann mindestens eine zusätzliche Beschichtung auf der Schicht der besagten Formulierung als Deckschicht vorgesehen sein. Die mindestens eine Zwischenschicht und/oder Deckschicht kann beispielsweise aus PTFE oder PU sein.

Mit einer im IR niedrigemittierenden Beschichtung gemäß der Erfindung kann hierbei der Wärmeeintrag in bzw. der Wärmeverlust aus der Halle signifikant reduziert werden. Dabei kann eine niedrigemittierende Beschichtung sowohl auf der Innen- als auch auf der Außenseite eines Gebäudes zum Einsatz kommen.

Durch die Reduktion der Wärmeabstrahlung des Gewebes, der Membran, der Folie, des Vlieses, des Filzes, des Gewirkes, des Gestrickes oder des Papiers, die mit mindestens einer Lage der erfindungsgemäßen Formulierung beschichtet sind, an den Innenraum wird im Sommer die Kühllast des Gebäudes verkleinert, was eine Energieeinsparung bedeutet und eine geringere Dimensionierung der Klimaanlage erlaubt. Ebenso wird der Heizenergiebedarf im Winter verkleinert. Hier wird die Wärmestrahlung des Innenraums wieder in diesen zurückreflektiert und so der Wärmeverlust nach außen reduziert. Gleichzeitig strahlt das erfindungsgemäße Low-e Gewebe, die Low-e Membran, die Low-e Folie, das Low-e Vlies, der Low-e Filz, das Low-e Gewirke, das Low-e Gestricke oder das Low-e Papier nur wenig Wärme nach außen ab bzw. reflektiert einen Großteil der auftreffenden Wärmestrahlung.

Aber auch in Altbauten können die erfindungsgemäß beschichteten Substrate, beispielsweise in Form von Geweben, Membranen oder Folien, eingebracht werden, um Bauwunden zu schließen und um die Wärmedämmung zu erhöhen. Eine nachträgliche Ausgestaltung des Innenraums, durch flexible Abtrennungen, aber auch durch Vorhänge und Glasgewebetapeten, ist nahezu problemlos machbar, um den Wohnkomfort zu erhöhen und den Energiebedarf zu verringern.

Im Gebäudebereich werden zunehmend Textil- oder Glasgewebe, Membranen und Folien eingesetzt. Da die verwendeten, unbehandelten Materialien im Allgemeinen einen hohen Emissionsgrad von über 0,9 besitzen, können sie mit einer niedrigemittierenden Beschichtung gemäß der Erfindung versehen werden, um Low-e Eigenschaften zu erreichen.

Der Spektralbereich der solaren Einstrahlung erstreckt sich vom UV über das sichtbare Licht bis zum nahen Infrarot, wobei etwa 45% der Einstrahlung im nahen Infrarot liegen. Die Wärmestrahlung, die von einer Oberfläche bei Raumtemperatur abgegeben wird, liegt im mittleren bis fernen Infrarot. Die erfindungsgemäßen Low-e Beschichtungen zielen darauf ab, den Emissionsgrad insbesondere im Wellenlängenbereich von 3 $\mu$m bis 50 $\mu$m, insbesondere im Bereich des Maximums der Wärmestrahlung bei Raumtemperatur (10 $\mu$m) abzusenken.

Neben der Verringerung des *U*-Wertes (Wärmedurchgangskoeffizient) der Wand spielt auch die Erhöhung der thermischen Behaglichkeit eine wesentliche Rolle. Im Falle einer kalten Außenwand fühlen sich die Personen im Raum unwohl, selbst wenn die Lufttemperatur ausreichend hoch ist. Außerdem besteht eine Strahlungsasymmetrie zwischen Innen- und Außenwand, die ebenfalls als unangenehm empfunden wird. Als Folge wird vom Nutzer die Lufttemperatur erhöht, was zu einem gesteigerten Energieverbrauch führt.

Ein geringer Emissionsgrad der Wandoberfläche mit einem beschichteten Material gemäß der vorliegenden Erfindung erhöht die sogenannte empfundene Temperatur der Wandoberflächen, da hierdurch die von einer Person abgegebene Wärmestrahlung wieder zurückreflektiert wird. Dieser Effekt ist umso höher, je geringer der Emissionsgrad ist.

Ein weiterer Effekt, der speziell bei gut gedämmten Gebäuden zum Tragen kommt, ist die Verminderung von Tauwasserbildung durch eine außenseitig aufgebrachte Low-e Beschichtung. Vor allem in klaren Nächten können die äußeren Bauteiloberflächen aufgrund des Strahlungsaustausches mit dem kalten Nachthimmel stark abkühlen, sogar auf Temperaturen unterhalb der Außenlufttemperatur. Dies führt zur Tauwasserbildung auf der Oberfläche. Bei gut gedämmten Gebäuden kommt dies relativ häufig vor, so dass die Algenbildung auf den Oberflächen ein zunehmendes Problem darstellt. Durch eine Verringerung des Emissionsgrades kann die Tauwasserbildung signifikant herabgesetzt werden. Diese überproportionale Reduktion ist darauf zurückzuführen, dass bei einem geringen Emissionsgrad die Wärmeübertragung im Wesentlichen durch Konvektion stattfindet, wodurch die Wandoberflächentemperatur meist höher ist als die Lufttemperatur, was eine Tauwasserbildung effektiv vermindert.

Die erfindungsgemäßen Low-e Beschichtungen können generell in Anwendungen zum Einsatz kommen, bei denen die Wärmeabstrahlung oder Wärmereflexion eine Rolle spielt. Konkrete Anwendungsgebiete sind der Bereich der textilen Architektur, Sonnenschutz (innen- und außenliegend), Markisen, Sonnenschirme, Pavillon-Zelte, Gebäudebereich, energetische Sanierung, Atrium, Zelte, militärische Tarnung, Automobilbereich, Dachhimmel, Kühlmöbel, temporäre Abdeckung, Bekleidung, Textilien, etc.

Mögliche Substrate, auf denen die erfindungsgemäße Formulierung - in einer oder in mehreren Schichten - aufgebracht werden kann, sind dabei Polyestergewebe, Glasfasergewebe, PVC (Polyvinylchlorid)-Membran, ETFE (Ethylen-Tetrafluorethylen)-Folie, Kunstfasergewebe, Kunststoffmembran oder Kunststofffolie. Die Substrate können jeweils bereits beschichtet sein, z.B. mit PTFE (Polytetrafluorethylen), PU (Polyurethan), Farbe, etc.

Die erfindungsgemäße Beschichtung umfasst eine Polymermatrix, in welche infrarotreflektierende Pigmente, in Pulverform und als Pigmentpaste, und vorzugsweise zusätzlich Farbpigmente, bevorzugt in vordispergierter Form oder als Farbpaste, zur Erzeugung von erwünschten Farbeindrücken im visuellen Bereich des Spektrums eingebettet sind.

Als infrarotreflektierende Partikel werden erfindungsgemäß plättchenförmige Aluminiumpartikel mit einem mittleren Teilchendurchmesser von 15 - 35 $\mu$m verwendet.

Die verwendeten Aluminiumpartikel weisen hierbei gemäß der Erfindung wenn Farbpigmente der Formulierung beigemischt sind - einen Massenanteil an der ausgehärteten Beschichtung von 15 - 40 Gew.-%, besonders bevorzugt im Bereich von 22 - 33 Gew.-%, insbesondere im Bereich von ca. 25 Gew.-%, auf.

Die plättchenförmigen Aluminiumpartikel sind bevorzugt non-leafing-Partikel, d.h. die Partikel sind vollständig vom Umgebungsmedium benetzt und in der Beschichtung homogen verteilt. Gemäß einer Alternative sind die plättchenförmigen Aluminiumpartikel leafing-Partikel, d.h. die Partikel sind auf der Oberfläche der ausgehärteten Beschichtung verteilt.

Gemäß einer vorteilhaften Ausführungsform enthält die erfindungsgemäße Formulierung Mischungen von unterschiedlichen Aluminiumpartikeln mit unterschiedlichen mittleren Teilchendurchmessern.

Bevorzugt liegen die Aluminiumpartikel vor Einmischung in die erfindungsgemäße Formulierung als Paste vor. Die Verwendung einer Paste mit Aluminiumpartikeln verhindert die bei reinen Aluminiumpulvern während des Verarbeitungsprozesses auftretende Staubentwicklung und vermindert die Explosionsgefahr erheblich. Darüber hinaus wird die Dispergierung der Aluminiumpartikel in die erfindungsgemäße Formulierung erleichtert.

Gemäß einer Weiterbildung der Erfindung weisen die Aluminiumpartikel (bzw. allgemein die infrarotreflektierenden Partikel) auf ihrer Oberfläche funktionale Gruppen auf, die durch Oberflächenbehandlung und/oder -modifikation der Aluminiumpartikel erhalten wurden. Auf diese Weise können z.B. die leafing- oder non-leafing-Effekte und/oder die Oberflächenbenetzung gezielt eingestellt werden. Mit Hilfe von Metallalkoxidverbindungen, wie z.B. Tetraalkoxisilanen oder Tetraethoxisilanen, ist es beispielsweise möglich, Farbpigmente auf die Aluminiumpartikel aufzubringen. Der leafing- oder non-leafing-Effekt wird durch die Oberflächenspannung der Pigmente bestimmt. Eine hohe Oberflächenspannung führt zum Aufschwimmen der Pigmente.

Die Oberflächenbeschaffenheit sowie die Homogenität der Randlinie der einzelnen Aluminiumpartikel sind entscheidend für das Reflexionsverhalten und somit für den Emissionsgrad der Beschichtung. Trifft einfallende thermische IR-Strahlung auf die Aluminiumpartikel, so treten grundsätzlich zwei physikalische Effekte auf, die einen Beitrag zum Reflexionsgrad liefern. Auf der Oberfläche der Partikel kommt es zu einer gerichteten (Rück-)Reflexion der einfallenden Strahlung. An den Rändern der Partikel tritt diffuse Streuung (in alle Raumrichtungen) auf, so dass ein Teil der Strahlung vom Partikel reflektiert, und ein Teil der Strahlung vom umgebenden Medium absorbiert wird. Bei fransigen, welligen, dicken und rauen Aluminiumpartikeln ist die Wahrscheinlichkeit für das Auftreten diffuser Streuung deutlich höher, als bei Aluminiumpartikeln mit einer ebenen, homogenen Oberfläche und einer glatten Randlinie. Durch die Verwendung von Aluminiumpartikeln mit ebener, homogener Oberfläche und glatter Randlinie kann somit ein geringerer Emissionsgrad erreicht werden, als dies bei Verwendung von fransigen, welligen, dicken und rauen Aluminiumpartikeln möglich ist.

Wenn keine Farbpigmente (s. weiter unten) der Formulierung beigemischt und Al-Partikel als infrarotreflektierende Partikel verwendet werden, kann ein thermischer Emissionsgrad von $\varepsilon < 0{,}25$ bei Raumtemperatur erhalten werden. Die bisherigen experimentellen Ergebnisse haben sogar gezeigt, dass ein thermischer Emissionsgrad von $\varepsilon < 0{,}10$ bei Raumtemperatur erzielbar ist. Ohne eine derartige bzw. nennenswerte Zumischung von Farbpigmenten zur Formulierung liegt der Massenanteil der Aluminiumpartikel in der ausgehärteten Beschichtung erfindungsgemäß zwischen 55 und 95 Gew.-%, bevorzugt zwischen 65 und 85 Gew.-% und besonders bevorzugt im Bereich von 70 bis 75 Gew.-%.

Werden Farbpigmente zu der erfindungsgemäßen Formulierung hinzugegeben, kommen diese vorzugsweise mit einem Massenanteil an der ausgehärteten Beschichtung von 30 - 80 Gew.-%, bevorzugt 45 - 70 Gew.-% und besonders bevorzugt 50 - 60 Gew.-% zum Einsatz. Es kann sich hierbei um organische und/oder anorganische Farbpigmente handeln. Gemäß der Erfindung weisen die zugesetzten Farbpigmente einen mittleren Durchmesser im Bereich 10 nm - 1 $\mu$m und besonders bevorzugt mit Abmessungen im Bereich von 100 nm - 700 nm.

Die Funktion der Farbpigmente ist die Folgende: Die infrarotreflektierenden, gemäß der Erfindung in eine Trägermatrix aus einem Polymer eingebauten Partikel bewirken hohe Reflexionsgrade im infraroten, aber unerwünschtermaßen auch im sichtbaren Spektralbereich. Durch die Zumischung von Farbpigmenten, die sich - wie auch die Aluminiumpartikel - homogen in der Matrix verteilen, oder durch die Umhüllung der Aluminiumpartikel mit Farbpigmenten kann der metallische Farbeindruck unterbunden werden und die gewünschte Farbe eingestellt werden. Im letztgenannten Fall besteht eine vorteilhafte Herstellungsmöglichkeit darin, die Aluminiumpartikel mit den Farbpigmenten zu umhüllen und die erhaltene Paste in die Polymermatrix einzumischen.

Nanoskalige Farbpigmente neigen jedoch auf Grund starker Kohäsionskräfte zur Agglomeration, so dass eine geeignete Dispergierung vorteilhaft ist. Unter Dispergierung versteht man die Zerlegung der Pigmentagglomerate in Primärteilchen mit der oben angegeben bevorzugten Größe. Diese Aufspaltung in möglichst großer Zahl führt einerseits zu einer Vergrößerung der Gesamtoberfläche der Farbpigmente und andererseits zu einer homogenen Verteilung der Farbpigmente in der Lösung, Paste oder Matrix. Bei nicht ausreichender Dispergierung liegt das Farbpigment agglomeriert vor und kann die Aluminiumpartikel in der Beschichtung nicht vollständig bedecken bzw. umhüllen. In der Folge wird sichtbares Licht an den nicht bedeckten bzw. umhüllten Aluminiumpartikeln reflektiert, wodurch ein metallischgräulicher Farbeindruck der Beschichtung entsteht. Die Farbintensität und die Brillanz des Farbeindrucks steigen demnach mit zunehmender Dispergierung und homogener Verteilung der Farbpigmente in der Beschichtungsmatrix.

Allerdings darf die Schicht auf den Aluminiumpartikeln nicht zu dick sein, um den thermischen Emissionsgrad nicht zu stark zu erhöhen. Die oben angegebenen bevorzugten Bereiche der Teilchengrößen der Farbpigmente sowie das oben angegebene Mischungsverhältnis von Aluminiumpartikeln zu Farbpigmenten (bzw. Schwarz- oder Weißpigmenten) haben sich hierbei als bevorzugt erwiesen.

Um eine ausreichende Dispergierung der Farbpigmente zu gewährleisten, wird der Beschichtungsansatz gemäß einer bevorzugten Ausführungsform der Erfindung, umfassend eine Polymermatrix, infrarotaktive Pigmente und Farbpigmente, vor der Beschichtung vorteilhafterweise einer Ultraschalldesintegration, oder einer anderen Dispergiermethode mit ausreichendem Energieeintrag unterzogen. Die Wirkungsweise der Ultraschall-Dispergierung beruht auf vom Resonator erzeugten mechanischen Vibrationen. Diese werden auf den Beschichtungsansatz übertragen, wobei innerhalb der Suspension Druckgradienten entstehen, welche die agglomerierten Partikelverbände aufbrechen und somit eine homogene Verteilung der Farb- und IR-aktiven Pigmente in der Polymer- bzw. Beschichtungsmatrix ermöglichen.

Gemäß einer vorteilhaften Alternative kann eine bereits vordispergierte Farbpaste anstelle des pulverförmigen Farbpigments verwendet werden. In der Farbpaste liegen die Farbpigmente in Form von nicht agglomerierten Primärteilchen vor, so dass auf eine Ultraschalldesintegration des Beschichtungsansatzes weitestgehend verzichtet werden kann. Um eine bestmögliche Dispergierung der Farb- und IR-aktiven Pigmente in der Polymermatrix zu gewährleisten, sollte die Dispergierung unmittelbar vor dem Beschichtungsprozess durchgeführt werden.

Gemäß einer alternativen Ausführungsform der Erfindung werden keine oder derart geringe Mengen Farbpigmente zugesetzt, dass der Massenanteil an

Farbpigmenten in der ausgehärteten Beschichtung bei 0 - 30 Gew.-%, vorzugsweise 0 - 20 Gew.-%, und besonders bevorzugt 0 - 10 Gew.-% liegt.

Als Polymermatrix wird bevorzugt ein geeignetes Polyurethanharz verwendet, beispielsweise ein Polyesterurethan-Adduct auf Basis von Toluylendiisocyanat, das bei Anwendung bevorzugt durch Zusatz von Polyisocyanat vernetzt wird, wobei das Polyurethanharz vorzugsweise mit einem Massenanteil an der ausgehärteten Beschichtung von 5 - 30 Gew.-%, bevorzugt von 10 - 25 Gew.-% und besonders bevorzugt im Bereich von 15 - 20 Gew.-% verwendet wird. Der Vernetzer dient lediglich zur schnelleren Aushärtung der Formulierung. Einen nennenswerten Effekt auf den thermischen Emissionsgrad hat der Vernetzer in der Regel nicht.

Die Erfindung umfasst demnach auch den Fall, dass kein Vernetzer eingesetzt wird. Es hat sich beispielsweise herausgestellt, dass eine derart hergestellte Formulierung bei bestimmten Verarbeitungsschritten Vorteile mit sich bringt.

Der sehr niedrige, mittels der erfindungsgemäßen Formulierung zu erreichende thermische Emissionsgrad ist im Wesentlichen bedingt durch die äußerst homogene, nicht agglomerierte Verteilung der infrarotreflektierenden Partikel und ggf. der Farbpigmente in dem mindestens einen thermoplastischen und/oder duroplastischen Polymer gelöst in dem mindestens ein nichtwässrigen Lösungsmittel.

Verwendet werden kann beispielsweise das Produkt "Impranil® C Lösung" von Bayer MaterialScience mit einem nichtflüchtigen Anteil von 30% (nach DIN EN ISO 3251). Besondere Eigenschaften dieser Matrix liegen in der hohen Haftfestigkeit, der guten Hydrolysebeständigkeit, der guten Wetterbeständigkeit, dem hohen Abriebwiderstand und der Wasch- und Chemischreinigungsbeständigkeit. Impranil® C Lösung eignet sich für Beschichtungen mit mittelhartem Griff, die in verschiedenen Textilanwendungen (z.B. Schutzbekleidung, Sportbekleidung, Abdeckplanen, Containerabdeckungen, leichte Transportbänder, Bügeltücher, Campingartikel, Markisen, Feuerwehrschläuche, Zeltstoffe und Schlafsackböden) ihren Einsatz finden.

Ein geeigneter bevorzugter Vernetzer bzw. Härter zur schnelleren Vernetzung bzw. Trocknung stammt aus der Familie der Polyisocyanate. Insbesondere ein aromatisch-aliphatisches Polyisocyanat auf Basis von Toluyendiisocyanat/ Hexamethylendiisocyanat ist geeignet. Bei einem Polyurethanharz als Polymer wird vorzugsweise ein Vernetzer mit einem Massenanteil von 5-12 Gew.-% und vorzugsweise im Bereich von 7 - 10 Gew.-%, insbesondere 8 Gew.-%, in Bezug auf das Polyurethanharz verwendet.

Für das obengenannte Polyurethan bietet sich beispielsweise "Imprafix® TRL Lösung" an, wobei es sich vom Typ her um ein aromatisch-aliphatisches Polyisocyanat auf Basis von Toluyendiisocyanat/Hexamethylendiisocyanat handelt, welches ca. 60%ig (nichtflüchtiger Anteil nach DIN EN ISO 3251) in Butylacetat geliefert wird. Es findet bevorzugt mit einem Massenanteil von 7,7 % in Bezug auf das verwendete Polyurethan Verwendung. Der NCO-Gehalt (nach DIN EN ISO 11909) beträgt ca. 10,5 %. Dabei wird die Imprafix® TRL Lösung erst unmittelbar vor dem Gebrauch in die Streichpaste eingerührt, um die Topfzeit (8-10 Stunden) optimal auszunutzen. Es ist unbedingt auf eine gleichmäßige Verteilung des Vernetzers zu achten. Imprafix© TRL Lösung ist verdünnbar mit Ethylacetat, Butylacetat und 1-Methoxypropylacetat-2 (MPA).

Bevorzugt ist das mindestens eine Lösungsmittel aus der Gruppe der Acetate, insbesondere Ethylacetat, Butylacetat und/oder 1-Methoxypropylacetat-2 (MPA) gewählt. Auch DMF (Dimethylformamid) ist vorteilhafterweise einsetzbar. Aromaten sind hierbei keine echten Löser und besitzen als Verschnittmittel nur eine beschränkte Verträglichkeit. Die Viskositäten der erhaltenen Lösungen lagen im Bereich von 1 - 15 mPa s. Die Aufbringung erfolgte großtechnisch unter der Verwendung einer Stahlwalze oder Luftrakel. Die Trockenauflage der Beschichtung (nach DIN EN 12127) lag im Bereich zwischen 10 - 100 g/m$^2$, wobei bereits mit einer relativ geringen Auflage von beispielsweise 12 g/m$^2$ eine hervorragend deckende Beschichtung gewonnen werden konnte. Die Dicke der Beschichtungen (nach DIN EN 5084) lag dabei im Bereich von 0.15 - 0.35 mm. Nach DIN EN ISO 105 B02 wiesen die Beschichtungen durchweg Lichtechtheiten > 7 (vorzüglich) mit Tendenz zur besten Lichtechtheit 8 (hervorragend) auf. Nach DIN EN ISO 105X12 konnten gute Reibechtheiten mit Werten von 4 - 5 erhalten werden. Die erfindungsgemäß eine Beschichtung aufweisenden flexiblen Körper weisen vorzugsweise generell eine Lichtechtheit nach der genannten DIN EN ISO-Norm größer gleich 6 und eine Reibechtheit im trockenen Zustand nach der genannten DIN EN ISO-Norm größer gleich 3 auf.

Die beschichteten Substrate wurden infrarot-optisch charakterisiert. Dabei wurde insbesondere der spektrale gerichtet-hemisphärische Reflexionsgrad $R_{gh}$ und der spektrale gerichtet-hemisphärische Transmissionsgrad $T_{gh}$ der Proben mittels des Messprinzips der integrierenden Kugel (Ulbricht-Kugel) bei Raumtemperatur im Wellenlängenbereich zwischen 0,25 $\mu$m und 35 $\mu$m erfasst. Aus dem spektralen gerichtet-hemisphärischen Reflexionsgrad $R_{gh}$ und Transmissionsgrad $T_{gh}$ wird der spektrale Emissionsgrad gemäß Gl. (1) berechnet

$$\varepsilon_\lambda = 1 - R_{gh} - T_{gh} \qquad\qquad (1)$$

Bei opaken Proben ($T_{gh} \approx 0$) vereinfacht sich Gl. (1) zu:

$$\varepsilon_\lambda = 1 - R_{gh} \qquad\qquad (2)$$

Zur Messung der Proben im Wellenlängenbereich von 0,25 μm bis 35 μm wurde ein Perkin Elmer Lambda 950 UV-VIS-NIR (0,25 - 2,5 μm) Spektrophotometer sowie ein Bruker IFS 66v FTIR und ein Bruker Vector 22 FTIR (2,5 - 35 μm) verwendet. Aus dem messtechnisch gewonnenen spektralen Emissionsgrad kann der thermische Emissionsgrad $\varepsilon(T)$ berechnet werden. Wenn in dieser Anmeldung lediglich von "Emissionsgrad" die Rede ist, ist damit der thermische Emissionsgrad gemeint.

Jede Oberfläche strahlt entsprechend ihrer Temperatur Wärme an die Umgebung ab. Der thermische Emissionsgrad $\varepsilon(T)$ ist dabei ein Maß für die Wärmemenge, die eine solche Oberfläche insgesamt abstrahlt. Der thermische Emissionsgrad $\varepsilon(T)$ in Abhängigkeit von der Temperatur T lässt sich aus dem spektralen Emissionsgrad $\varepsilon_\lambda$ durch Integration über alle Wellenlängen mit der Planck-Funktion $i_\lambda(T)$ als Gewichtungsfunktion berechnen:

$$\varepsilon(T) = \frac{\int\limits_0^\infty \varepsilon_\lambda(T) \cdot i_\lambda(T) \cdot \mathrm{d}\lambda}{\int\limits_0^\infty i_\lambda(T) \cdot \mathrm{d}\lambda} \qquad\qquad (3)$$

Die Planck-Funktion $i_\lambda(T)$ gibt an, wie viel ein schwarzer Körper bei einer gegebenen Temperatur T abstrahlen würde. Der relevante Spektralbereich für Raumtemperatur entspricht in guter Näherung dem Wellenlängenbereich von 3 μm bis 35 μm. Bei Zahlenangaben des thermischen Emissionsgrades im Rahmen dieser Anmeldung wird dieser in Bezug auf Raumtemperatur angegeben, d.h. ca. 300 Kelvin.

Während unbeschichtete Gewebe wie beispielsweise Polyestergewebe einen hohen thermischen Emissionsgrad von 0,95 aufweisen, zeigte sich, dass mit der oben beschriebenen, erfindungsgemäßen Formulierung mechanisch stabile und homogene Beschichtungen auf Gewebe, Membranen, Folien, Vliese, Filze, Gewirke, Gestricke oder Papiere aufgebracht werden können, wobei ein thermischer Emissionsgrad von 0,10 im Fall einer reinen Aluminiumbeschichtung (Ausführungsbeispiel 1) und thermische Emissionsgrade von 0,30 im Falle farbiger low-e Beschichtungen (Ausführungsbeispiel 2) erreicht werden konnten. Die Homogenität der Beschichtungen konnte durch die infrarotoptische Charakterisierung an zahlreichen verschiedenen Stellen gezeigt werden.

Bevorzugte geeignete Substanzen für die Herstellung der erfindungsgemäßen Formulierung sind die genannten "Impranil® C-Lösung", "Impraperm® AD-03/1 und "Imprafix® TRL Lösung" (jeweils von Bayer MaterialScience). Analoge Substanzen mit gleichen oder ähnlichen effektiven Bestandteilen sind ebenfalls selbstverständlich verwendbar.

Ausführungsbeispiel 1

Polymer "Impranil® C Lösung" (30%-ig) von Bayer MaterialScience: 4,221 kg; Härter/Vernetzer "Imprafix® TRL Lösung" (60%-ig) von Bayer MaterialScience: 0,324 kg;
Lösungsmittel 1-Methoxypropylacetat-2 (MPA): 10 kg;
Aluminiumpigment Stapa 2100® von Eckart GmbH: 3,987 kg.

Dies entspricht einem Massenanteil des Polymers an der ausgehärteten Beschichtung von 26,8 Gew.-% und einem Massenanteil des Aluminiumpigments an der ausgehärteten Beschichtung von 73,2 Gew-%.

Die Bestandteile werden bei Raumtemperatur in das Lösungsmittel eingerührt, bis eine homogene Beschichtungslösung vorliegt. Die Aufbringung auf das Polyestersubstrat erfolgt großtechnisch mittels einer Stahlwalzenbeschichtung. In einer Bandstraße wird die Beschichtung mittels einer Temperaturbeaufschlagung von bis zu 140 °C im Zeitraum < 5 Minuten getrocknet und anschließend in Form einer Rolle konfektioniert.

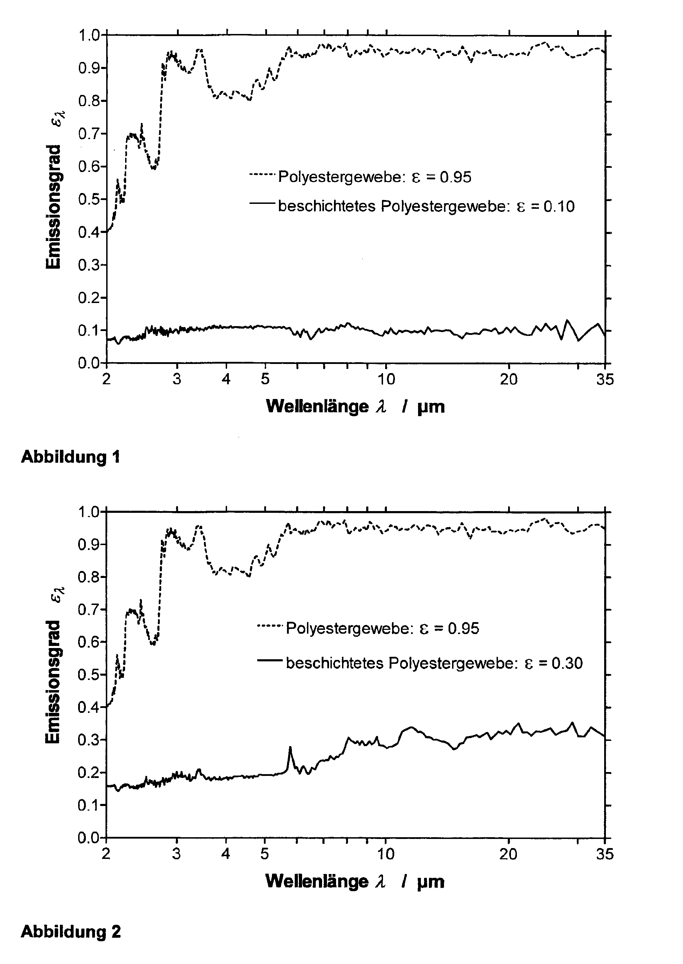

Abbildung 1 zeigt den spektralen Emissionsgrad $\varepsilon_\lambda$ im Infraroten sowie den thermischen Emissionsgrad $\varepsilon$ bei Raumtemperatur für ein mit Aluminiumpartikeln beschichtetes Polyestergewebe mit einem metallisch-silbrigen Farbeindruck im Vergleich zu einem unbeschichteten Polyestergewebe. Die Homogenität der Beschichtung konnte durch die infrarotoptische Charakterisierung an zahlreichen verschiedenen Stellen gezeigt werden.

Ausführungsbeispiel 2

Polymer "Impranil® C Lösung" (30%-ig) von Bayer MaterialScience: 4,221 kg; Härter/Vernetzer "Imprafix® TRL Lösung" (60%-ig) von Bayer MaterialScience: 0,324 kg;
Lösungsmittel 1-Methoxypropylacetat-2 (MPA): 10 kg;
Aluminiumpigment Stapa® 2100 von Eckart GmbH: 3,987 kg;
Farbpigment Sicomin® Gelb L 1835 S von BASF SE: 6,478 kg.

Dies entspricht einem Massenanteil des Polymers an der ausgehärteten Beschichtung von 12,3 Gew.-%, einem Massenanteil des Farbpigments an der ausgehärteten Beschichtung von 54,3 Gew.-% und einem Massenanteil des Aluminiumpigments an der ausgehärteten Beschichtung von 33,4 Gew.-%.

Die Bestandteile werden bei Raumtemperatur in das Lösungsmittel eingerührt, bis eine homogene Beschichtungslösung vorliegt. Die Viskosität der Lösung beträgt 5,10 mPa s. Die Aufbringung auf das Polyestersubstrat erfolgt großtechnisch mittels einer Stahlwalzenbeschichtung. In einer Bandstraße wird die Beschichtung mittels einer Temperaturbeaufschlagung von bis zu 140 °C im Zeitraum < 5 Minuten getrocknet und anschließend in Form einer Rolle konfektioniert.

Abbildung 2 zeigt den spektralen Emissionsgrad $\varepsilon_\lambda$ im Infraroten und den thermischen Emissionsgrad $\varepsilon$ bei Raumtemperatur für ein beschichtetes Polyestergewebe mit einem gelben Farbeindruck im Vergleich zu einem unbeschichteten Polyestergewebe. Die Homogenität der Beschichtung konnte durch die infrarotoptische Charakterisierung an zahlreichen verschiedenen Stellen gezeigt werden.

**Verwendete Parameter:**

| | |
|---|---|
| $\varepsilon_\lambda$ | spektraler Emissionsgrad |
| $\varepsilon$ | thermischer Emissionsgrad |
| $i_\lambda$ | Planck-Funktion |
| $\lambda$ | Wellenlänge |
| $T$ | Temperatur |
| $T_{gh}$ | gerichtet-hemisphärischer Transmissionsgrad |
| $R_{gh}$ | gerichtet-hemisphärischer Reflexionsgrad |

**Patentansprüche**

1. Flüssige oder pastöse Formulierung zum Auftragen auf flexible Materialien, insbesondere Gewebe, Membranen, Folien, Vliese, Filze, Gewirke, Gestricke oder Papiere, und anschließendem Aushärten der entsprechend aufgetragenen Beschichtung, umfassend mindestens ein thermoplastisches und/oder duroplastisches Polymer, mindestens ein nichtwässriges Lösungsmittel sowie Partikel mit infrarotreflektierenden Eigenschaften, insbesondere im Wellenlängenbereich von 3 $\mu$m bis 50 $\mu$m, wobei die infrarotreflektierenden Partikel plättchenförmige Aluminiumpartikel mit einem mittleren primären Teilchendurchmesser von 15 - 35 $\mu$m umfassen, wobei

   a) die Aluminiumpartikel, ohne eine Zumischung von Farbpigmenten zu der Formulierung, einen Massenanteil in der ausgehärteten Beschichtung von 55 - 95 Gew.-%, bevorzugt 65 - 85 Gew.-% und besonders bevorzugt im Bereich von 70-75 Gew.-%, haben, oder

   b) die Aluminiumpartikel, bei Zumischung von Farbpigmenten zu der Formulierung, einen Massenanteil in der ausgehärteten Beschichtung im Bereich von 15 - 40 Gew.-%, bevorzugt im Bereich von 22 - 33 Gew.-%, haben, wobei die zugesetzten Farbpigmente einen mittleren primären Teilchendurchmesser im Bereich zwischen 10 nm und 1 $\mu$m aufweisen, vorzugsweise im Bereich zwischen 100 nm und 700 nm.

2. Formulierung nach Anspruch 1, **dadurch gekennzeichnet, dass** das besagte mindestens eine Polymer ein Polyurethanharz ist.

3. Formulierung nach Anspruch 1, **dadurch gekennzeichnet, dass** die Farbpigmente einen Massenanteil in der ausgehärteten Beschichtung von 30 - 80 Gew.-%, vorzugsweise von 45 - 70 Gew.-% und besonders bevorzugt von 50 - 60 Gew.-%, haben.

4. Formulierung nach Anspruch einem der vorhergehenden Ansprüche, umfassend Mischungen unterschiedlicher Farbpigmente mit unterschiedlichen Farbeindrücken und/oder verschiedenen mittleren Teilchendurchmessern.

**5.** Formulierung nach einem der vorhergehenden Ansprüche, **<u>dadurch gekennzeichnet,</u> dass** keine oder derart geringe Mengen Farbpigmente zugesetzt sind, dass der Massenanteil an Farbpigmenten in der ausgehärteten Beschichtung von 0 - 30 Gew.-%, vorzugsweise von 0-20 Gew.-%, und besonders bevorzugt von 0 - 10 Gew.-%, beträgt.

**6.** Formulierung nach einem der vorhergehenden Ansprüche, **<u>dadurch gekennzeichnet,</u> dass** Mischungen von unterschiedlichen Aluminiumpartikeln mit unterschiedlichen mittleren Teilchendurchmessern enthalten sind.

**7.** Formulierung nach einem der vorhergehenden, **<u>dadurch gekennzeichnet,</u> dass** die Aluminiumpartikel auf ihrer Oberfläche funktionale Gruppen aufweisen, die durch Oberflächenbehandlung und/oder - modifikation der Aluminiumpartikel erhalten wurden.

**8.** Formulierung nach einem der vorhergehenden Ansprüche, **<u>dadurch gekennzeichnet,</u> dass** das Polymer einen Massenanteil in der ausgehärteten Beschichtung von 5 - 30 Gew.-%, vorzugsweise von 10-25 Gew.-% und besonders bevorzugt im Bereich von 15 - 20 Gew.-%, hat.

**9.** Formulierung nach einem der vorhergehenden Ansprüche, **<u>dadurch gekennzeichnet,</u> dass** das mindestens eine Lösungsmittel aus der Gruppe der Acetate, insbesondere Ethylacetat, Butylacetat und/oder 1-Methoxypropylacetat-2 (MPA) stammt oder DMF (Dimethylformamid) umfasst.

**10.** Formulierung nach einem der vorhergehenden Ansprüche, **<u>dadurch gekennzeichnet,</u> dass** mindestens ein Vernetzer zur schnelleren Vernetzung bzw. Trocknung zugegeben ist, vorzugsweise ein Vernetzer aus der Familie der Polyisocyanate, insbesondere ein aromatisch-aliphatisches Polyisocyanat auf Basis von Toluyendiisocyanat/ Hexamethylendiisocyanat.

**11.** Formulierung nach Anspruch 10, **<u>dadurch gekennzeichnet,</u> dass** bei Ausbildung des Polymers als Polyurethanharz der besagte Vernetzer einen Massenanteil von 5 - 12 Gew.-% und vorzugsweise im Bereich von 7 - 10 Gew.-% in Bezug auf das Polyurethanharz aufweist.

**12.** Flexibler Körper mit einem flexiblen Substrat, insbesondere Gewebe, Membran, Folie, Vlies, Filz, Gewirke, Gestricke oder Papier, **<u>dadurch gekennzeichnet,</u> dass** das Substrat mit einer Formulierung nach einem der vorhergehenden Ansprüche in einer oder mehreren Lagen beschichtet ist, wobei es sich bei dem Substrat vorzugsweise um ein Polyestergewebe, ein Glasfasergewebe, eine PVC-Membran, eine ETFE-Folie, ein Kunstfasergewebe, eine Kunststoffmembran oder eine Kunststofffolie handelt.

**13.** Körper mit der vorgenannten Beschichtung nach Anspruch 12, **<u>dadurch gekennzeichnet,</u> dass** er mindestens eine Zwischenschicht zwischen der Oberfläche des Substrats und der Schicht der besagten Formulierung aufweist, wobei es sich bei der mindestens einen Zwischenschicht vorzugsweise um PTFE oder PU handelt.

**14.** Körper mit der vorgenannten Beschichtung nach Anspruch 12 oder 13, **<u>dadurch gekennzeichnet,</u> dass** das Low-e Gewebe, die Low-e Membran, die Low-e Folie, das Low-e Vlies, der Low-e Filz, das Low-e Gewirke, das Low-e Gestricke oder das Low-e Papier eine zusätzliche Beschichtung auf der Schicht der besagten Formulierung als Deckschicht erhält, wobei es sich bei der der Deckschicht vorzugsweise um PTFE oder PU handelt..

**15.** Verwendung von flexiblen Körpern nach einem der Ansprüche 12 bis 14, in der textilen Architektur, für Gebäude, Textilien oder im Automobilbereich, insbesondere in flexiblen, innen- oder außenliegenden Verschattungs- bzw. Sonnenschutzanwendungen, bei Kühlmöbel, Bekleidung, Markisen, Sonnenschirme, bei Zelten oder in Tarnanwendungen.

**16.** Verfahren zur Beschichtung eines flexiblen Substrats mit einer Formulierung nach einem der Ansprüche 1 bis 11, **<u>dadurch gekennzeichnet,</u> dass** die Beschichtung mittels Rakeln, vorzugsweise Luftrakeln oder Gummirakeln, Streichen, Tauchbeschichten, Sprühen, Foulardieren, Pflatschen, Drucken und Stahlwalzenbeschichtung aufgebracht wird.

**Claims**

**1.** A liquid or paste formulation for applying to flexible materials, particularly to woven fabrics, membranes, films, non-wovens, felts, knitted fabrics, knotted fabrics, or papers, and subsequently curing the correspondingly applied coating, comprising at least one thermoplastic and/or duroplastic polymer, at least one non-aqueous solvent, and particles having infrared reflective properties, particularly in the wavelength range from 3 $\mu$m to 50 $\mu$m, said infrared reflective particles comprising small plate-shaped aluminum particles having a mean primary particle diameter of 15 - 35 $\mu$m, **characterized in that**

a) the aluminum particles, without the addition of color pigments to the formulation, comprise a mass proportion in the cured coating of 55-95 wt%, preferably 65-85 wt%, and particularly preferably in the range from 70-75 wt%, or

b) the aluminum particles, with the addition of color pigments to the formulation, comprise a mass proportion of the cured coating in the range from 15-40 wt%, preferably in the range from 22-33 wt%, wherein the added color pigments comprise a mean primary particle diameter in the range from 10 nm to 1 $\mu$m, preferably in the range between 100 nm and 700 nm.

2. The formulation according to claim 1, **characterized in that** said at least one polymer is a polyurethane resin.

3. The formulation according to claim 1, **characterized in that** the color pigments comprise a mass proportion in the cured coating of 30-80 wt%, preferably of 45-70 wt%, and particularly preferably of 50-60 wt%.

4. The formulation according to any one of the preceding claims, comprising mixtures of different color pigments having different color appearances and/or different mean particle diameters.

5. The formulation according to any one of the preceding claims, characterized in that no or sufficiently small quantities of color pigments are added such that the mass proportion of color pigments in the cured coating is 0-30 wt%, preferably 0-20 wt%, and particularly preferably 0-10 wt%.

6. The formulation according to any one of the preceding claims, **characterized in that** mixtures of different aluminum particles having different mean particle diameters are present.

7. The formulation according to any one of the preceding claims, **characterized in that** the aluminum particles comprise functional groups on the surface thereof obtained by surface treatment and/or modification of the aluminum particles.

8. The formulation according to any one of the preceding claims, **characterized in that** the polymer comprises a mass proportion in the cured coating of 5-30 wt%, preferably 10-25 wt%, and particularly preferably in the range of 15-20 wt%.

9. The formulation according to any one of the preceding claims, **characterized in that** at least one solvent is from the group of acetates, particularly ethyl acetate, butyl acetate and/or 1-methoxypropyl acetate-2 (MPA) or comprises DMF (dimethylformamide).

10. The formulation according to any one of the preceding claims, **characterized in that** at least one cross-linking agent is added for more rapid cross-linking or drying, preferably a cross-linking agent from the family of polyisocyanates, particularly an aromatic-aliphatic polyisocyanate based on toluene diisocyanate/hexamethylene diisocyanate.

11. The formulation according to claim 10, **characterized in that** said cross-linking agent comprises a mass proportion of 5-12 wt% and preferably in the range of 7-10 wt% with respect to the polyurethane resin when forming the polymer as polyurethane resin.

12. A flexible body having a flexible substrate, particularly a woven fabric, membrane, film, non-woven, felt, knitted fabric, knotted fabric or paper, **characterized in that** the substrate is coated with a formulation according to any one of the preceding claims in one or more layers, wherein the substrate is preferably a polyester woven fabric, a fiberglass woven fabric, a PVC membrane, an ETFE film, a synthetic fiber woven fabric, a plastic membrane, or a plastic film.

13. A body having the aforementioned coating according to claim 12, **characterized in that** said body comprises at least one intermediate layer between the surface of the substrate and the layer of said formulation, wherein the at least one intermediate layer is preferably PTFE or PU.

**14.** A body having the aforementioned coating according to claim 12 or 13, **<u>characterized in that</u>** the low-e woven fabric, the low-e membrane, the low-e film, the low-e non-woven, the low-e felt, the low-e knitted fabric, the low-e knotted fabric, or the low-e paper comprises an additional coating on the layer of said formulation as a top coating, wherein the top coating is preferably PTFE or PU.

**15.** The use of flexible bodies according to any one of the claims 12 through 14 in textile architecture, for buildings, textiles, or in the automotive field, particularly in flexible, interior or exterior shade or sun protection applications, for cooling units, clothing, awnings, sun umbrellas, tents, or in camouflage applications.

**16.** A method for coating a flexible substrate with a formulation according to any one of the claims 1 through 11, **<u>characterized in that</u>** the coating is applied by means of blades, preferably air knives or rubber knives, by painting, immersion coating, spraying, foularding, padding, printing, and steel roller coating.

**Revendications**

**1.** Formulation liquide ou pâteuse destinée à l'application sur des matériaux souples, en particulier des tissus, des membranes, des feuilles, des étoffes non-tissées, des feutres, des étoffes à mailles, des étoffes tricotées ou des papiers et au durcissement consécutif du revêtement ainsi appliqué, comprenant au moins un polymère thermoplastique et/ou duroplastique, au moins un solvant non-aqueux ainsi que des particules possédant des propriétés de réflexion des infrarouges, en particulier dans la gamme de longueurs d'ondes de 3 $\mu$m à 50 $\mu$m, dans laquelle les particules réfléchissant les infrarouges comprennent des particules d'aluminium en forme de plaquettes avec un diamètre de particule primaire de 15-35 $\mu$m, dans laquelle

a) les particules d'aluminium, sans addition de pigments colorants à la formulation, présentent une part en poids dans le revêtement durci de 55-95 pour cent en poids, de préférence de 65-85 pour cent en poids, et de manière particulièrement préférée de 70-75 pour cent en poids, ou
b) les particules d'aluminium, en cas d'addition de pigments colorants à la formulation, présentent une part en poids dans le revêtement durci située dans la plage de 15-40 pour cent en poids, de préférence dans la plage de 22-33 pour cent en poids, sachant que les pigments colorants ajouté présentent un diamètre de particule primaire situé dans une plage de 10 nm à 1 $\mu$m, de préférence dans une plage de 100 nm à 700 nm.

**2.** Formulation selon la revendication 1, **<u>caractérisée en ce que</u>** ledit au moins un polymère est une résine polyuréthane.

**3.** Formulation selon la revendication 1, **<u>caractérisée en ce que</u>** les pigments colorants présentent une part en poids dans le revêtement durci de 30-80 pour cent en poids, de préférence de 45-70 pour cent en poids, et de manière particulièrement préférée de 50-60 pour cent en poids.

**4.** Formulation selon l'une des revendications précédentes, contenant des mélanges de pigments colorants différents avec des impressions chromatiques différentes et/ou des diamètres de particules moyens différents.

**5.** Formulation selon l'une des revendications précédentes, **<u>caractérisée en ce que</u>** des pigments colorants ne sont pas ajoutés ou ne le sont qu'en quantités aussi faibles que la part en poids des pigments colorants dans le revêtement durci s'élève à 0-30 pour cent en poids, de préférence à 0-20 pour cent en poids, et de manière particulièrement préférée de 0-10 pour cent en poids.

**6.** Formulation selon l'une des revendications précédentes, **<u>caractérisée en ce que</u>** des mélanges de particules d'aluminium différentes avec des diamètres de particules moyens différents sont contenus.

**7.** Formulation selon l'une des revendications précédentes, **<u>caractérisée en ce que</u>** les particules d'aluminium présentent sur leur surface des groupes fonctionnels obtenus par traitement et/ou modification de la surface des particules d'aluminium.

**8.** Formulation selon l'une des revendications précédentes, **<u>caractérisée en ce que</u>** le polymère a dans le revêtement durci une part en poids de 5-30 pour cent en poids, de préférence de 10-25 pour cent en poids, et, de manière particulièrement préférée, de 15-20 pour cent en poids.

**9.** Formulation selon l'une des revendications précédentes, **<u>caractérisée en ce que</u>** l'au moins un solvant est issu du groupe des acétates, en particulier de l'acétate d'éthyle, l'acétate de butyle et/ou l'acétate de 1-méthoxy-2-propyle (MPA) ou il est du DMF (diméthylformamide).

**10.** Formulation selon l'une des revendications précédentes, <u>caractérisée en ce qu</u>'au moins un agent de réticulation est ajouté pour une réticulation ou un séchage plus rapide, de préférence un agent de réticulation appartenant à la famille des polyisocyanates, en particulier un polyisocyanate aromatique-aliphatique à base de diisocyanate de toluène/diisocyanate d'hexaméthylène.

**11.** Formulation selon la revendication 10, **<u>caractérisé en ce que</u>** lors de la formation du polymère en tant que résine polyuréthane, ledit agent de réticulation présente une part en poids de 5-12 pour cent en poids et de préférence situé dans une plage de 7-10 pour cent en poids par rapport à la résine polyuréthane.

**12.** Corps flexible avec un substrat flexible, en particulier tissu, membrane, feuille, étoffe non-tissée, feutre, étoffe à mailles, étoffe tricotée ou papier, **<u>caractérisé en ce que</u>** le substrat est revêtu d'une formulation selon l'une des revendications précédentes en une ou plusieurs couches, sachant que le substrat est de préférence un tissu polyester, un tissu en fibres de verre, une feuille CPV, une feuille ETF, un tissu en fibres synthétiques, une membrane en matière synthétique ou une feuille en matière synthétique.

**13.** Corps avec le revêtement précédent selon la revendication 12, <u>caractérisé en ce qu</u>'il comporte au moins une couche intermédiaire entre la surface du substrat et la couche de ladite formulation, sachant que l'au moins une couche intermédiaire est du PTFE ou du PU

**14.** Corps avec le revêtement précédent selon la revendication 12 ou 13, **<u>caractérisé en ce que</u>** le tissu à faible émissivité, la membrane à faible émissivité, la feuille à faible émissivité, le tissu non-tissé à faible émissivité, le feutre à faible émissivité, le tissu à maille à faible émissivité, le tissu tricoté à faible émissivité ou le papier à faible émissivité contient un revêtement supplémentaire en tant que couche de recouvrement sur la couche de ladite formulation, sachant que la couche de recouvrement est de préférence du PTFE ou du PU.

**15.** Utilisation de corps flexibles selon l'une des revendications 12 à 14 dans l'architecture textile, pour les bâtiments, les textiles ou dans le domaine automobile, en particulier dans les applications pare-soleil et/ou de protection solaire flexibles disposées à l'intérieur ou à l'extérieur, pour les meubles réfrigérants, les vêtements, les stores, les parasols, les tentes ou les applications de camouflage.

**16.** Procédé pour revêtir un substrat flexible avec une formulation selon l'une des revendications 1 à 11, **<u>caractérisé en ce que</u>** le revêtement est appliqué par raclage, de préférence par raclage à la lame d'air ou par raclage à la lame de caoutchouc, enduction, immersion, pulvérisation, foulardage, projection, impression et par revêtement au rouleau en acier.

**Abbildung 1**

**Abbildung 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20213477 U1
- DE 102005061684 A1
- US 20070251420 A1
- DE 19501114 C2
- US 20060159922 A1